# EUROPÄISCHE PATENTSCHRIFT

(11) **EP 3 958 433 B1**
(45) Veröffentlichungstag und Bekanntmachung des Hinweises auf die Patenterteilung: **31.12.2025**
(21) Anmeldenummer: 21187411.0
(22) Anmeldetag: 23.07.2021
(51) Int. Cl.: H02J 50/12, H02J 50/80

(54) **VERFAHREN ZUM BETREIBEN EINER VORRICHTUNG ZUM DRAHTLOSEN ÜBERTRAGEN VON ENERGIE IN RICHTUNG EINES ELEKTRISCHEN VERBRAUCHERS MITTELS INDUKTIVER KOPPLUNG, VORRICHTUNG UND SYSTEM**
METHOD FOR OPERATING A DEVICE FOR WIRELESS TRANSMISSION OF ENERGY IN THE DIRECTION OF AN ELECTRICAL CONSUMER BY MEANS OF INDUCTIVE COUPLING, DEVICE AND SYSTEM
PROCÉDÉ DE FONCTIONNEMENT D'UN DISPOSITIF DE TRANSMISSION SANS FIL D'ÉNERGIE VERS UN CONSOMMATEUR ÉLECTRIQUE AU MOYEN D'UN COUPLAGE INDUCTIF, DISPOSITIF ET SYSTÈME

(30) Priorität: 20.08.2020 DE 102020210558
(43) Veröffentlichungstag der Anmeldung: 23.02.2022
(73) Patentinhaber: E.G.O. Elektro-Gerätebau GmbH, 75038 Oberderdingen (DE)
(72) Erfinder: Egenter, Christian, 75015 Bretten (DE); Göbel, Robin, 76698 Ubstadt-Weiher (DE); Herweg, Elmar, 75038 Oberderdingen (DE); Müller, Max-Felix, 75038 Oberderdingen (DE); Wächter, Ulrich, 76646 Bruchsal (DE)
(74) Vertreter: Patentanwälte Ruff, Wilhelm, Beier, Dauster & Partner mbB

(56) Entgegenhaltungen:
- WO-A1-2020/002219
- US-A1- 2009 174 263

## Beschreibung

Die Erfindung betrifft ein Verfahren zum Betreiben einer Vorrichtung zum drahtlosen Übertragen von Energie in Richtung eines elektrischen Verbrauchers mittels induktiver Kopplung, eine Vorrichtung und ein System.

Die WO 2020/002219 A1 zeigt ein Verfahren zum Betreiben einer Vorrichtung zum drahtlosen Übertragen von Energie in Richtung eines elektrischen Verbrauchers mittels induktiver Kopplung. Die Vorrichtung weist eine mittels eines Ansteuersignals angesteuerte Leistungsspule auf, die dazu ausgebildet ist, zum Übertragen der Energie ein magnetisches Wechselfeld zu erzeugen. Es wird ein Arbeitspunkt des Ansteuersignals in Abhängigkeit von einem Sollwert ermittelt.

Die US 2009/0174263 A1 offenbart eine induktive Leistungsversorgung, die in Resonanz betrieben wird und die ein Tastverhältnis basierend auf einer Rückkopplung von einem elektrischen Verbraucher einstellt.

Der Erfindung liegt die Aufgabe zugrunde, ein Verfahren zum Betreiben einer Vorrichtung zum drahtlosen Übertragen von Energie in Richtung eines elektrischen Verbrauchers mittels induktiver Kopplung, eine Vorrichtung und ein System zur Verfügung zu stellen, die einen möglichst zuverlässigen und flexiblen Betrieb ermöglichen.

Das Verfahren dient zum Betreiben einer Vorrichtung zum drahtlosen Übertragen von Energie in Richtung eines elektrischen Verbrauchers mittels induktiver Kopplung, auch als Wireless Power Transfer, WPT, bezeichnet. Hinsichtlich der Grundlagen zu WPT sei auch auf die einschlägige Fachliteratur verwiesen. Bevorzugt wird die Vorrichtung gemäß dem WPC (Wireless Power Consortium) Ki (Cordless Kitchen) Verfahren betrieben.

Die Vorrichtung zum drahtlosen Übertragen von Energie in Richtung eines elektrischen Verbrauchers mittels induktiver Kopplung kann auch als Transmitter bezeichnet werden und der elektrische Verbraucher kann als Receiver bezeichnet werden.

Die Vorrichtung weist eine herkömmliche Leistungsspule oder Transmitterspule auf, die dazu ausgebildet ist, zum Übertragen der Energie ein magnetisches Wechselfeld zu erzeugen. Hierzu wird die Leistungsspule oder ein die Leistungsspule aufweisender Schwingkreis mit einem, insbesondere periodischen, Ansteuersignal, insbesondere in Form einer Ansteuerspannung, beaufschlagt, das/die einen von einem Sollwert abhängigen bzw. zu dem Sollwert passenden Arbeitspunkt aufweist. Ein Arbeitspunkt bezeichnet hierbei insbesondere eine oder mehrere Eigenschaften des Ansteuersignals, beispielsweise Amplitude, Tastgrad und/oder Frequenz des Ansteuersignals.

In einer Ausführungsform bestimmt der Arbeitspunkt die Frequenz des Ansteuersignals. In anderen Worten ist dem ersten Arbeitspunkt eine erste Frequenz zugeordnet und einem zweiten bzw. weiteren Arbeitspunkt ist eine zweite bzw. weitere Frequenz zugeordnet. Im Übrigen kann das Ansteuersignal bei unterschiedlichen Arbeitspunkten unverändert sein.

In einer Ausführungsform ist der Sollwert ein Leistungssollwert, der eine an den elektrischen Verbraucher zu übertragende Leistung angibt.

Der Sollwert wird drahtlos vom elektrischen Verbraucher zu der Vorrichtung kommuniziert.

In einer Ausführungsform wird eine übertragbare (Wirk-) Leistung über der Frequenz ermittelt, wobei in Abhängigkeit von der ermittelten übertragbaren Leistung über der Frequenz und dem Leistungssollwert der mindestens eine Arbeitspunkt des Ansteuersignals ermittelt wird.

Beispielsweise kann für eine Anzahl von diskreten Frequenzen in einem interessierenden Arbeitsfrequenzbereich die übertragbare (Wirk-) Leistung ermittelt/gemessen werden. Basierend darauf kann beispielsweise eine Zuordnungstabelle erstellt werden, die einem gewünschten Leistungssollwert eine Frequenz des Ansteuersignals zuordnet. Sobald ein bestimmter Leistungssollwert angefordert wird, kann dann basierend auf der Zuordnungstabelle die zugehörige Frequenz gefunden werden. Ist ein angeforderter Leistungssollwert nicht exakt in der Zuordnungstabelle enthalten, kann beispielsweise zwischen zwei benachbarten Leistungssollwerten/Frequenzen interpoliert werden.

Zum Ermitteln der übertragbaren Leistung kann beispielsweise eine Impedanz der Leistungsspule über der Frequenz ermittelt werden, und/oder eine Impedanz eines die Leistungsspule aufweisenden Schwingkreises über der Frequenz ermittelt werden und/oder eine übertragbare/übertragene Leistung über der Frequenz durch geeignete Messung von Strom und Spannung ermittelt werden.

In einer Ausführungsform wird für den Fall, dass für einen Leistungssollwert mehr als ein Arbeitspunkt ermittelt wird, derjenige Arbeitspunkt der mehreren Arbeitspunkte ausgewählt, der einem Optimierungskriterium genügt.

In einer Ausführungsform ist das Optimierungskriterium die minimale Verlustleistung.

Zum Suchen des weiteren zu dem Sollwert gehörenden Arbeitspunkts wird die Frequenz des Ansteuersignals verändert, wobei bevorzugt während des Suchens eine Amplitude des Ansteuersignals reduziert wird. Die Amplitude kann kleiner als 60 V, insbesondere kleiner gleich 24 V sein.

Es wird eine Impedanz der Leistungsspule über der Frequenz ermittelt, und/oder eine Impedanz eines die Leistungsspule aufweisenden Schwingkreises über der Frequenz ermittelt und/oder eine übertragbare/übertragene Leistung über der Frequenz ermittelt. Der weitere zu dem Sollwert gehörende Arbeitspunkt wird dann in Abhängigkeit von der Impedanz der Leistungsspule über der Frequenz, und/oder Abhängigkeit von der Impedanz des die Leistungsspule aufweisenden Schwingkreises über der Frequenz und/oder in Abhängigkeit von der übertragbaren/übertragenen Leistung über der Frequenz gesucht.

Es wird ermittelt, ob ein lokales Maximum der Impedanz über der Frequenz oder ein lokales Minimum der übertragbaren Leistung über der Frequenz vorhanden ist, um das Vorhandensein des weiteren Arbeitspunkts zu detektieren. Ein weiterer Arbeitspunkt kann sich ergeben, wenn neben einem ersten Minimum der übertragbaren Leistung zusätzlich ein Maximum im vorgesehenen Frequenzbereich entdeckt wird.

In einer Ausführungsform wird eine Verlustleistung an dem ersten Arbeitspunkt und an dem/den gegebenenfalls gefundenen weiteren Arbeitspunkt(en) bestimmt, wobei anschließend der Arbeitspunkt mit der geringeren Verlustleistung eingestellt wird.

Die Vorrichtung zum drahtlosen Übertragen von Energie in Richtung eines elektrischen Verbrauchers mittels induktiver Kopplung ist zur Durchführung des oben beschriebenen Verfahrens ausgebildet.

Die Vorrichtung weist einen Wechselrichter oder einen Umrichter auf, der aus einer Speisespannung versorgt ist. Die Speisespannung ist bevorzugt eine Gleichspannung. Der Wechselrichter kann beispielsweise einen herkömmlich verschalteten Wechselrichterzweig mit zwei Halbleiterschaltmitteln aufweisen. Alternativ kann die Vorrichtung auch zwei Wechselrichterzweige als Vollbrückenschalung aufweisen. Insoweit sei auch auf die einschlägige Fachliteratur verwiesen.

Die Vorrichtung weist weiter mindestens einen Kondensator und eine Leistungsspule auf, wobei der mindestens eine Kondensator und die Leistungsspule derart verschaltet sind, dass sie einen Parallel- oder Serienschwingkreis bilden.

Der Wechselrichter ist dazu ausgebildet, aus der Speisespannung ein, insbesondere pulsweitenmoduliertes, Ansteuersignal für die Leistungsspule bzw. für den Schwingkreis zu erzeugen. Das pulsweitenmodulierte Ansteuersignal ist typisch eine Rechteckspannung mit einem konstanten oder veränderlichen Tastgrad bzw. Tastverhältnis und einer konstanten oder veränderlichen Periodendauer bzw. Frequenz. Insoweit sei auch auf die einschlägige Fachliteratur verwiesen.

Der Wechselrichter weist weiter eine Steuereinheit auf, die dazu ausgebildet ist, den Wechselrichter derart anzusteuern, dass ein Verfahren nach einem der vorhergehenden Ansprüche ausgeführt wird.

Das System weist eine oben beschriebene Vorrichtung und einen elektrischen Verbraucher auf.

Wireless Power Transfer (WPT) soll für kabellose Geräte bzw. elektrische Verbraucher eine Energieversorgung bereitstellen, die vergleichbar flexibel wie eine Steckdose genutzt werden kann. Die erfindungsgemäße Vorrichtung zum drahtlosen Übertragen von Energie in Richtung eines elektrischen Verbrauchers wird auch als Transmitter bezeichnet und der elektrische Verbraucher als Receiver.

Die Energieübertragung bei WPT erfolgt über magnetische Kopplung zwischen einer Leistungsspule im Transmitter und einer korrespondierenden Leistungsspule im Receiver, die beide vorzugsweise mittels Kondensatoren auf eine gleiche oder zumindest ähnliche Resonanzfrequenz abgestimmt sind. Es ergibt sich somit eine frequenzabhängige Übertragungsfunktion des Receivers zum Transmitter. Die Übertragungsfunktion kann beispielsweise als die im Receiver abgenommene Leistung P_Last(f), die übertragene Spannung U_Last(f) bzw. Strom I_Last(f) im Receiver, die übertragbare/übertragene Leistung, oder die Gesamtimpedanz Z_tot(f) jeweils abhängig von der Arbeitsfrequenz f des Transmitters dargestellt werden.

Ein Transmitter kann beispielsweise in einem Induktionskochfeld integriert sein oder als versteckte Versorgungseinheit unter eine Küchenarbeitsplatte bzw. einer Tischplatte untergebaut werden. Auch portable Transmitter zur flexiblen Nutzung von kabellosen Receivern sind möglich.

Der Receiver ist typisch in einem kabellosen Gerät, insbesondere einem Küchengerät, integriert, wobei die Geräte unterschiedlichste Funktionen wie beispielsweise Heizen, Rühren, Mixen, Zerkleinern bzw. Kombinationen von Funktionen beinhalten können, wobei Leistungsbedarf und Durchmesser der Geräte sehr stark variieren können, beispielsweise von 50 bis 2400 Watt oder Leistungsspulendurchmessern im Receiver von beispielsweise 8 bis 23 cm, was zu stark unterschiedlichen Übertragungsfunktionen und Arbeitspunkten des Wechselrichters im Transmitter führt.

Die Bedienung erfolgt vorzugsweise am Receiver, wozu dieser mit einer Hilfsenergie vom Transmitter versorgt werden muss, wenn gleichzeitig eine Batterie im Receiver vermieden werden soll. Auch wird ein Datenaustausch zwischen Receiver und Transmitter benötigt, damit Einstellungen, usw. ausgetauscht werden können.

Vorzugsweise werden zur Kommunikation Antennen in Form von Kommunikationsspulen mit kurzer Reichweite eingesetzt, da so eine eindeutige Zuordnung vom Receiver zum Transmitter gegeben ist und keine Verwechslung mit einem benachbarten Sender möglich ist, wie dies beispielsweise bei einer BLE-Kommunikation der Fall wäre. Bei einer geeigneten Nahfeldkommunikation sind die Kommunikationsspulen mit den Leistungsspulen wirkverbunden, sie liegen beispielsweise zwischen den Leistungsspulen, weshalb über diese Kommunikationsspulen auch die Übertragung einer kleinen Hilfsenergie zum Aktivieren einer zumindest einfachen Bedienung und Anzeige möglich ist und so ein batterieloser Betrieb ermöglicht wird. Ein Nachteil dieser Anordnung ist jedoch, dass sich Leistungsspulen und Kommunikationsspulen gegenseitig beeinflussen, weshalb normalerweise nur entweder die Kommunikation oder die Leistungsversorgung zur gleichen Zeit aktiv sein darf.

Die von einem Transmitter an einen Receiver übertragbare Leistung wird unter anderem durch die magnetische Kopplung von der Leistungsspule des Transmitters zur Leistungsspule des Receivers begrenzt, da bei gegebener Dimensionierung eines Wechselrichters der Strom im Transmitter erhöht werden muss, wenn die Kopplung schlechter wird. D.h. abhängig von der Kopplung sowie der maximalen Strombelastbarkeit des Transmitter-Wechselrichters ergibt sich eine maximal übertragbare Leistung, die aber auch von Designparametern des Receivers abhängig ist.

Alternativ bzw. ergänzend zum Ermitteln der gesamten Übertragungsfunktion können auch ein oder mehrere, zum aktuellen Arbeitspunkt benachbarte Arbeitspunkte gemessen werden, um so auf die partielle Steilheit am Arbeitspunkt schließen zu können und entsprechend beispielsweise eine Regler-Schrittweite anpassen zu können. Aus mehreren Messpunkten lassen sich mehrere Ersatzparameter berechnen. Beispielsweise können so auch Ersatzparameter des Receivers vom Transmitter unabhängig von kommunizierten Daten des Receivers selbst berechnet werden, um so Steuerungsparameter des Gesamtsystems bestimmen zu können.

Da die Leistungsspulen und die Kommunikationsspulen herkömmlich nur alternierend betrieben werden können, können keine Impedanzmessungen mit der Leistungsspule des Transmitters während den Kommunikationszeiten durchgeführt werden. Ursache dieser Einschränkung ist, dass die Leistungsspulen aus der Netzspannung versorgt werden und insbesondere beim Einschalten eines Umrichters/Wechselrichters im Transmitter üblicherweise die Scheitelspannung der Netzspannung am Umrichter/Wechselrichter anliegt, was zu relativ großen Strömen beim Betrieb des Umrichters führt, die die Kommunikation stören würden.

Der Transmitter kann während des Datenaustausches anstatt an die Netzspannung an eine Speisespannung von kleiner 60 V, insbesondere kleiner gleich 24 V, 16 V oder 12 V, geschaltet werden, so dass der Strom durch die Leistungsspule des Transmitters während einer Impedanzmessung zur Ermittlung der Übertragungsfunktion oder zumindest eines oder mehrerer Arbeitspunkte auf der Übertragungsfunktion klein genug bleibt, um die Kommunikation und deren Versorgung bzw. die Empfängerschaltung nicht zu stören, so dass ein gleichzeitiger Messbetrieb mit den Leistungsspulen während des Kommunikationsbetriebs möglich wird. Anstatt oder ergänzend zur Impedanzmessung kann auch eine Eigenresonanzmessung während der Kommunikation durchgeführt werden, die zur Ermittlung der Kopplung zwischen Receiver und Transmitter und/oder als ForeignObjectDetection eingesetzt werden kann.

Mit anderen Worten kann eine Impedanzmessung der Leistungsspule des Transmitters mit limitierter Spannungshöhe zur Messung von betriebsrelevanten Parametern gleichzeitig mit der Kommunikation und/oder Energieübertragung über die Kommunikationsspulen erfolgen.

Die Übertragungsfunktion, d.h. der Frequenzverlauf der Impedanz bzw. der übertragenen/übertragbaren Leistung, besitzt zwei lokale Maxima bei großer Kopplung und großer Nennleistung des Receivers. Die größten Leistungsniveaus werden nur auf dem niederfrequenten Peak (oder "Höcker") erreicht, kleinere Leistungsniveaus können aber auf beiden Höckern erreicht werden, d.h. es gibt korrespondierende Arbeitspunkte mit gleicher Leistung auf beiden Höckern. Vorzugsweise wird auf beiden Höckern auf der absteigenden Seite mit einem negativen dP/df gearbeitet, da die dortigen Arbeitspunkte weniger Verluste im Wechselrichter verursachen. Abhängig von der Höhe der Schaltströme und des Übertragungswirkungsgrads können Arbeitspunkte auf dem höherfrequenten Höcker effizienter sein als auf dem niederfrequenten, obwohl die Schalthäufigkeit höher ist.

Erfindungsgemäß wird folglich geprüft, ob es zu dem angeforderten Leistungssollwert einen korrespondierenden Arbeitspunkt auf dem höherfrequenten Peak der Übertragungsfunktion mit ausreichend Leistung gibt, wobei zu diesem Arbeitspunkt gewechselt wird, falls dieser effizienter als der Arbeitspunkt auf dem niederfrequenten Peak ist.

Das Ermitteln eines korrespondierenden Arbeitspunktes kann auch während der Kommunikation und damit außerhalb des für die Energieversorgung vorgesehenen Zeitintervalls durchgeführt werden. Die Prüfung kann beispielswiese kurz vor und/oder nach einem Kommunikationsslot durchgeführt werden.

Zusammengefasst kann eine Leistungs- und/oder Impedanzmessung der Leistungsspule des Transmitters mit limitierter Spannungshöhe zur Messung von betriebsrelevanten Parametern gleichzeitig mit der Kommunikation und/oder Energieübertragung über die Kommunikationsspulen erfolgen.

Die Erfindung wird nachfolgend unter Bezugnahme auf die Zeichnungen detailliert beschrieben. Hierbei zeigt:
- Fig. 1: ein System mit einer Vorrichtung zum drahtlosen Übertragen von Energie in Richtung eines elektrischen Verbrauchers mittels induktiver Kopplung und dem elektrischen Verbraucher, und
- Fig. 2: eine in eine Leistungsspule der in Fig. 1 gezeigten Vorrichtung eingespeiste elektrische Wirkleistung in Abhängigkeit von einer Frequenz eines Ansteuersignals der Leistungsspule für verschiedene Kopplungsfaktoren, die eine magnetische Kopplung zwischen der Leistungsspule der Vorrichtung und einer korrespondierenden Leistungsspule des elektrischen Verbrauchers abbilden.

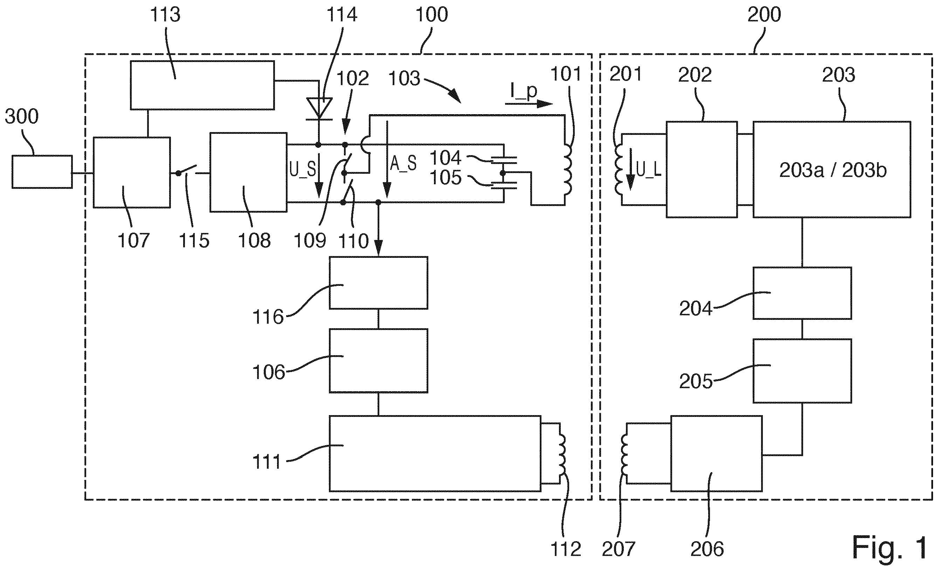

Fig. 1 zeigt ein System mit einer Vorrichtung 100 zum drahtlosen Übertragen von Energie in Richtung eines elektrischen Verbrauchers 200 mittels induktiver Kopplung und einem elektrischen Verbraucher 200.

Die Vorrichtung 100 kann auch als Transmitter bezeichnet werden. Der elektrische Verbraucher kann auch als Receiver bezeichnet werden.

Die Vorrichtung 100 ist aus einem Wechselstromnetz 300 gespeist.

Die Vorrichtung 100 weist ein Netzfilter 107 und einen nachgeschalteten Gleichrichter 108 zur Erzeugung einer Speisegleichspannung U_S mit einem zweiten Pegel auf. Zwischen Netzfilter 107 und Gleichrichter 108 ist ein Schalter 115 eingeschleift, dessen Funktion nachfolgend beschrieben wird.

Die Vorrichtung 100 weist weiter ein Kleinspannungsnetzteil 113 auf, das über eine Entkopplungsdiode 114 mit dem Ausgang des Gleichrichters 108 verbunden ist. Das Kleinspannungsnetzteil 113 dient zur Erzeugung der Speisegleichspannung U_S mit einem ersten Pegel, der kleiner als der zweite Pegel ist, der mittels des Gleichrichters 108 erzeugt wird. Solange die Speisegleichspannung U_S mit dem ersten Pegel erzeugt wird, ist der Schalter 115 geöffnet, sonst geschlossen.

Die Vorrichtung 100 weist weiter einen Wechselrichter 102 auf, der aus der Speisegleichspannung U_S versorgt ist.

Die Vorrichtung 100 weist weiter Kondensatoren 104, 105 auf, die in Serie zwischen Ausgangsanschlüsse des Gleichrichters 108 bzw. die Speisespannung U_S eingeschleift sind.

Die Vorrichtung 100 weist weiter eine Leistungsspule 101 auf, wobei die Kondensatoren 104, 105 und die Leistungsspule 101 derart verschaltet sind, dass sie einen Schwingkreis 103 bilden. Hierzu ist ein Anschluss der Leistungsspule 101 mit einem Verbindungsknoten von Halbleiterschaltmitteln 109, 110 des Wechselrichters 102 elektrisch verbunden und ein anderer Anschluss der Leistungsspule 101 ist mit einem Verbindungsknoten der Kondensatoren 104, 105 elektrisch verbunden.

Es versteht sich, dass die dargestellte Wechselrichter- und Schwingkreistopologie lediglich exemplarisch ist. Es kann im Rahmen der vorliegenden Erfindung beispielsweise ein Wechselrichter mit einer Vollbrücke verwendet werden, es können anders verschaltete Serien- oder Parallelschwingkreise verwendet werden, usw.

Der Wechselrichter 102 ist dazu ausgebildet, aus der Speisegleichspannung U_S ein pulsweitenmoduliertes Ansteuersignal A_S in Form einer Ansteuerspannung für den Schwingkreis 103 zu erzeugen.

Die Vorrichtung 100 weist weiter eine Steuereinheit bzw. einen Regler 106 auf, die/der dazu ausgebildet ist, den Betrieb der Vorrichtung 100 zu steuern.

Die Vorrichtung 100 weist weiter Messmittel 116 auf, die dazu ausgebildet sind, alle für den Betrieb der Vorrichtung 100 notwendigen Größen zu messen, insbesondere einen Strom I_p durch die Leistungsspule 101 zu messen und eine Spannung über der Spule 101 zu messen, so dass die Steuereinheit 106 eine in die Leistungsspule 101 eingespeiste elektrische Wirkleistung und einen Effektivwert eines in die Leistungsspule 101 eingespeisten Wechselstroms ermitteln kann.

Die Vorrichtung 100 weist weiter eine Kommunikationseinrichtung 111 auf, die mit einer Kommunikationsspule 112 gekoppelt ist. Die Kommunikationseinrichtung 111 in Verbindung mit der Kommunikationsspule 112 dient zum bidirektionalen Datenaustausch mit dem elektrischen Verbraucher 200.

Der elektrische Verbraucher 200 weist eine Leistungsspule 201 und einen nachgeschalteten passiven LC-Resonanzkreis 202 auf.

Der elektrische Verbraucher 200 weist weiter eine aus dem LC-Resonanzkreis 202 gespeiste elektrische Last 203 auf, beispielsweise in Form eines ohmschen Verbrauchers 203a oder eines Elektromotors 203b, beispielsweise in Form eines Einphasen-Reihenschlussmotors.

Der elektrische Verbraucher 200 weist weiter eine Messeinrichtung 204 auf, die dazu ausgebildet ist, alle für den Betrieb des elektrischen Verbrauchers 200 relevanten Größen zu messen, beispielsweise eine an der Last 203 anstehende Spannung und einen in die Last 203 fließenden Strom.

Der elektrische Verbraucher 200 weist weiter eine Steuereinheit bzw. einen Regler 205 auf, die/der dazu ausgebildet ist, den Betrieb des elektrischen Verbrauchers 200 zu steuern.

Der elektrische Verbraucher 200 weist weiter eine Kommunikationseinrichtung 206 auf, die mit einer Kommunikationsspule 207 gekoppelt ist. Die Kommunikationseinrichtung 206 in Verbindung mit der Kommunikationsspule 207 dient zum bidirektionalen Datenaustausch mit der Vorrichtung 100.

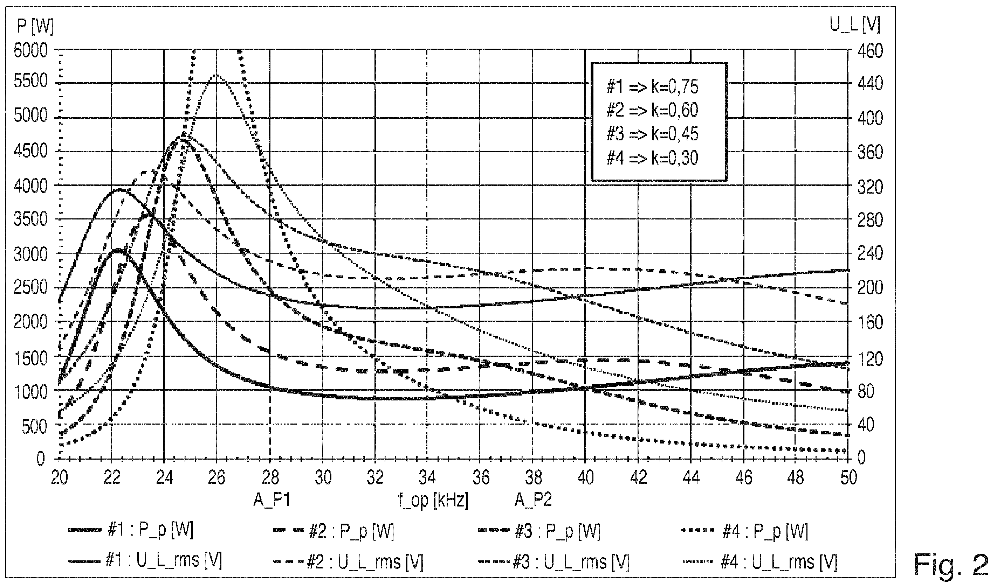

Fig. 2 zeigt den Einfluss der magnetischen Kopplung auf eine Übertragungsfunktion P(f) eines elektrischen Verbrauchers 200 mit einer Nennleistung von 2,2 kW. Die Übertragungsfunktion P(f) zeigt hierbei eine in die Leistungsspule 101 der in Fig. 1 gezeigten Vorrichtung 100 eingespeiste elektrische Wirkleistung in Abhängigkeit von einer Frequenz f des Ansteuersignals A_S. Die Übertragungsfunktion P(f) ist für verschiedene Kopplungsfaktoren k als Scharparameter dargestellt. Der Kopplungsfaktor k quantifiziert eine magnetische Kopplung zwischen den Leistungsspulen 101 und 201.

Fig. 2 zeigt weiter neben der Übertragungsfunktion P(f) auch die Spannung U_L (bzw. deren Effektivwert) an der Leistungsspule 201 des elektrischen Verbrauchers 200. Das Maximum der Spannung U_L tritt bei ohmscher Last bei Frequenzen des linken Maximums der Leistung auf.

Bei einem elektrischen Verbraucher 200, der für große Leistungen ausgelegt ist, kann eine Übertragungsfunktion P(f) mit 2 lokalen Maxima auftreten, sofern die magnetische Kopplung k zwischen Leistungsspule 101 im Transmitter und Leistungsspule 201 im Receiver ausreichend hoch ist. Gemäß den Auslegungsregeln bei Ki ist das linke Maximum bei der kleineren Frequenz größer als das Maximum bei der höheren Frequenz, weshalb dieser Arbeitsbereich zum Übertragen großer Leistungen verwendet werden muss. Der gezeigte Verbraucher 200 weist bei Kopplungen von 0,75 und 0,6 zwei Peaks auf, bei einer Kopplung von 0,3 aber nur einen Peak. Bei der Kopplung von 0,45 besitzt die Übertragungsfunktion zwar Wendepunkte, aber kein zweites lokales Maximum.

Der Betrieb des Systems wird nachfolgend beschrieben. Bei den folgenden Betrachtungen wird eine magnetische Kopplung bzw. ein Kopplungsfaktor k = 0,75 angenommen.

Die Leistungsspule 101 wird mit einem Ansteuersignal bzw. einer Ansteuerspannung A_S beaufschlagt, das/die einen ersten, von einem Sollwert abhängigen Arbeitspunkt A_P1 aufweist. Der Sollwert ist ein Leistungssollwert, der eine zu übertragende Leistung angibt, vorliegend ca. 1000 Watt. Der Arbeitspunkt A_P1 bestimmt eine Frequenz des Ansteuersignals A_S, vorliegend ca. 28 kHz. Der Sollwert wird beispielsweise drahtlos vom elektrischen Verbraucher 200 zu der Vorrichtung 100 kommuniziert.

Erfindungsgemäß wird ein weiterer Arbeitspunkt, hier A_P2, gesucht, der dem Leistungs-Sollwert von ca. 1000 Watt ebenfalls entspricht. Im Arbeitspunkt A_P2 weist das im Übrigen unveränderte Ansteuersignal A_S eine Frequenz von ca. 38 kHz auf.

Zum Suchen des Weiteren zu dem Sollwert gehörenden Arbeitspunkts A_P2 wird die Frequenz des Ansteuersignals A_S über einen interessierenden Arbeitsfrequenzbereich hinweg verändert bzw. gesweept, wobei während des Suchens eine Amplitude des Ansteuersignals A_S reduziert wird. Während der Suche wird fortlaufend für jede Frequenz die übertragbare Leistung ermittelt, beispielsweise indem eine in die Leistungsspule 101 eingespeiste elektrische Wirkleistung gemessen wird. Der weitere zu dem Sollwert gehörende Arbeitspunkt A_P2 wird in Abhängigkeit von der übertragbaren Leistung über der Frequenz gesucht/gefunden.

Es wird eine Verlustleistung an dem ersten Arbeitspunkt A_P1 und an dem gegebenenfalls gefundenen weiteren Arbeitspunkt A_P2 bestimmt, wobei anschließend der Arbeitspunkt A_P1 oder A_P2 mit der geringeren Verlustleistung eingestellt wird.

Grundsätzlich wird erfindungsgemäß eine übertragbare Leistung über der Frequenz ermittelt, siehe Fig. 2. Bei einer Änderung des Leistungssollwerts und/oder nach einem Start der Vorrichtung 100 wird dann in Abhängigkeit von der ermittelten übertragbaren Leistung über der Frequenz und dem Leistungssollwert der mindestens eine Arbeitspunkt A_P1, A_P2, d.h. die Frequenz des Ansteuersignals A_S, ermittelt.

Für den Fall, dass für einen Leistungssollwert mehr als ein Arbeitspunkt A_P1, A_P2 ermittelt wird, wird derjenige Arbeitspunkt der mehreren Arbeitspunkte ausgewählt, der einem Optimierungskriterium genügt. Das Optimierungskriterium ist beispielsweise die minimale Verlustleistung.

## Patentansprüche

1. Verfahren zum Betreiben einer Vorrichtung (100) zum drahtlosen Übertragen von Energie in Richtung eines elektrischen Verbrauchers (200) mittels induktiver Kopplung, wobei die Vorrichtung (100) aufweist:
- eine mittels eines Ansteuersignals (A_S) angesteuerte Leistungsspule (101), die dazu ausgebildet ist, zum Übertragen der Energie ein magnetisches Wechselfeld zu erzeugen,
- wobei das Verfahren die Schritte aufweist:
- Ermitteln mindestens eines Arbeitspunkts (A_P1, A_P2) des Ansteuersignals (A_S) in Abhängigkeit von einem Sollwert,
- wobei der Sollwert drahtlos vom elektrischen Verbraucher (200) zu der Vorrichtung (100) kommuniziert wird,
- wobei das Ansteuersignal (A_S) in einem ersten Arbeitspunkt (A_P1) erzeugt wird, wobei ein weiterer zu dem Sollwert gehörender Arbeitspunkt (A_P2) gesucht wird, indem das Ansteuersignal (A_S) ausgehend von dem ersten Arbeitspunkt (A_P1) verändert wird,
- wobei zum Suchen des weiteren zu dem Sollwert gehörenden Arbeitspunkts (A_P2) die Frequenz des Ansteuersignals (A_S) verändert wird,
- **dadurch gekennzeichnet, dass** eine Impedanz der Leistungsspule (101) über der Frequenz ermittelt wird, und/oder eine Impedanz eines die Leistungsspule (101) aufweisenden Schwingkreises (103) über der Frequenz ermittelt wird und/oder eine übertragbare Leistung über der Frequenz ermittelt wird, wobei der weitere zu dem Sollwert gehörende Arbeitspunkt (A_P2) in Abhängigkeit von der Impedanz der Leistungsspule (101) über der Frequenz, und/oder in Abhängigkeit von der Impedanz des die Leistungsspule aufweisenden Schwingkreises (103) über der Frequenz und/oder in Abhängigkeit von der übertragbaren Leistung über der Frequenz gesucht wird,
- wobei ermittelt wird, ob ein lokales Maximum der Impedanz über der Frequenz oder ein lokales Minimum der übertragbaren Leistung über der Frequenz vorhanden ist, um das Vorhandensein des weiteren Arbeitspunkts (A_P2) zu detektieren.

2. Verfahren nach Anspruch 1, wobei
- der Arbeitspunkt (A_P1, A_P2) die Frequenz des Ansteuersignals (A_S) bestimmt.

3. Verfahren nach Anspruch 1 oder 2, wobei
- der Sollwert ein Leistungssollwert ist, der eine zu übertragende Leistung angibt.

4. Verfahren nach Anspruch 3, wobei
- eine übertragbare Leistung über der Frequenz ermittelt wird, wobei in Abhängigkeit von der ermittelten übertragbaren Leistung über der Frequenz und dem Leistungssollwert der mindestens eine Arbeitspunkt (A_P1, A_P2) des Ansteuersignals (A_S) ermittelt wird.

5. Verfahren nach Anspruch 4, wobei
- für den Fall, dass für einen Leistungssollwert mehr als ein Arbeitspunkt (A_P1, A_P2) ermittelt wird, derjenige Arbeitspunkt der mehreren Arbeitspunkte (A_P1, A_P2) ausgewählt wird, der einem Optimierungskriterium genügt.

6. Verfahren nach Anspruch 5, wobei
- das Optimierungskriterium die minimale Verlustleistung ist.

7. Verfahren nach einem der vorhergehenden Ansprüche, wobei
- während des Suchens eine Amplitude des Ansteuersignals (A_S) reduziert wird.

8. Verfahren nach einem der vorhergehenden Ansprüche, wobei
- eine Verlustleistung an dem ersten Arbeitspunkt (A_P1) und an dem gegebenenfalls gefundenen weiteren Arbeitspunkt (A_P2) bestimmt wird, wobei anschließend der Arbeitspunkt (A_P1, A_P2) mit der geringeren Verlustleistung eingestellt wird.

9. Vorrichtung (100) zum drahtlosen Übertragen von Energie in Richtung eines elektrischen Verbrauchers (200) mittels induktiver Kopplung, die zur Durchführung des Verfahrens nach einem der vorhergehenden Ansprüche ausgebildet ist, aufweisend:
- einen Wechselrichter (102), der aus einer Speisespannung (U_S) versorgt ist,
- mindestens einen Kondensator (104, 105),
- eine Leistungsspule (101),
- wobei der mindestens eine Kondensator (104, 105) und die Leistungsspule (101) derart verschaltet sind, dass sie einen Schwingkreis (103) bilden, und
- wobei der Wechselrichter (102) dazu ausgebildet ist, aus der Speisespannung (U_S) ein Ansteuersignal (A_S) für die Leistungsspule (101) zu erzeugen, und
- eine Steuereinheit (106), die **dadurch gekennzeichnet** ist, den Wechselrichter (102) derart anzusteuern, dass ein Verfahren nach einem der vorhergehenden Ansprüche ausgeführt wird.

10. System, aufweisend:
- eine Vorrichtung (100) zum drahtlosen Übertragen von Energie in Richtung eines elektrischen Verbrauchers (200) mittels induktiver Kopplung nach Anspruch 9, und
- einen elektrischen Verbraucher (200).

## Claims

1. Method for operating an apparatus (100) for wirelessly transferring energy in the direction of an electrical consumer (200) by means of inductive coupling, wherein the apparatus (100) comprises:
- a power coil (101) which is controlled by means of a control signal (A_S) and is designed to generate an alternating magnetic field for transferring the energy,
- wherein the method comprises the steps of:
- determining at least one operating point (A_P1, A _P2) of the control signal (A_S) on the basis of a target value,
- wherein the target value is communicated wirelessly from the electrical consumer (200) to the apparatus (100),
- wherein the control signal (A_S) is generated at a first operating point (A_P1), wherein a further operating point (A_P2) belonging to the target value is searched for by changing the control signal (A_S) starting from the first operating point (A_P1),
- wherein the frequency of the control signal (A_S) is changed in order to search for the further operating point (A_P2) belonging to the target value,
- **characterized in that** an impedance of the power coil (101) over the frequency is determined, and/or an impedance of a resonant circuit (103) comprising the power coil (101) over the frequency is determined, and/or a transferable power over the frequency is determined, wherein the further operating point (A_P2) belonging to the target value is searched for on the basis of the impedance of the power coil (101) over the frequency, and/or on the basis of the impedance of the resonant circuit (103) comprising the power coil over the frequency and/or on the basis of the transferable power over the frequency,
- wherein it is determined whether there is a local maximum of the impedance over the frequency or a local minimum of the transferable power over the frequency in order to detect the presence of the further operating point (A _P2).

2. Method according to Claim 1, wherein
- the operating point (A_P1, A_P2) determines the frequency of the control signal (A_S).

3. Method according to Claim 1 or 2, wherein
- the target value is a target power value that specifies a power to be transferred.

4. Method according to Claim 3, wherein
- a transferable power over the frequency is determined, wherein the at least one operating point (A_P1, A_P2) of the control signal (A_S) is determined on the basis of the determined transferable power over the frequency and the target power value.

5. Method according to Claim 4, wherein
- if more than one operating point (A_P1, A_P2) is determined for a target power value, that operating point of the plurality of operating points (A_P1, A_P2) which meets an optimization criterion is selected.

6. Method according to Claim 5, wherein
- the optimization criterion is the minimum power loss.

7. Method according to one of the preceding claims, wherein
- an amplitude of the control signal (A_S) is reduced while searching.

8. Method according to one of the preceding claims, wherein
- a power loss at the first operating point (A_P1) and at the possibly found further operating point (A_P2) is determined, wherein the operating point (A_P1, A_P2) with the lower power loss is then set.

9. Apparatus (100) for wirelessly transferring energy in the direction of an electrical consumer (200) by means of inductive coupling, which apparatus is designed to carry out the method according to one of the preceding claims, comprising:
- an inverter (102) fed from a supply voltage (U_S),
- at least one capacitor (104, 105),
- a power coil (101),
- wherein the at least one capacitor (104, 105) and the power coil (101) are interconnected in such a way that they form a resonant circuit (103), and
- wherein the inverter (102) is designed to generate a control signal (A_S) for the power coil (101) from the supply voltage (U_S), and
- a control unit (106) **characterized by** controlling the inverter (102) in such a way that a method according to one of the preceding claims is carried out.

10. System, comprising:
- an apparatus (100) for wirelessly transferring energy in the direction of an electrical consumer (200) by means of inductive coupling according to Claim 9, and
- an electrical consumer (200).

## Revendications

1. Procédé pour faire fonctionner un dispositif (100) destiné à la transmission sans fil d'énergie en direction d'un consommateur électrique (200) au moyen d'un couplage inductif, le dispositif (100) présentant :
- une bobine de puissance (101) commandée au moyen d'un signal de commande (A_S), qui est réalisée pour générer un champ magnétique alternatif afin de transmettre l'énergie,
- le procédé présentant les étapes suivantes :
- la détermination d'au moins un point de fonctionnement (A_P1, A_P2) du signal de commande (A_S) en fonction d'une valeur de consigne,
- la valeur de consigne étant communiquée sans fil depuis le consommateur électrique (200) vers le dispositif (100),
- le signal de commande (A_S) étant généré dans un premier point de fonctionnement (A_P1), un point de fonctionnement supplémentaire (A_P2) associé à la valeur de consigne étant recherché en modifiant le signal de commande (A_S) à partir du premier point de fonctionnement (A_P1),
- la fréquence du signal de commande (A_S) étant modifiée pour rechercher le point de fonctionnement supplémentaire (A_P2) associé à la valeur de consigne,
- **caractérisé en ce qu'**une impédance de la bobine de puissance (101) sur la fréquence est déterminée, et/ou une impédance d'un circuit oscillant (103) présentant la bobine de puissance (101) sur la fréquence est déterminée, et/ou une puissance transmissible sur la fréquence est déterminée, le point de fonctionnement supplémentaire (A_P2) associé à la valeur de consigne étant recherché en fonction de l'impédance de la bobine de puissance (101) sur la fréquence, et/ou en fonction de l'impédance du circuit oscillant (103) présentant la bobine de puissance sur la fréquence, et/ou en fonction de la puissance transmissible sur la fréquence,
- il étant déterminé s'il existe un maximum local de l'impédance sur la fréquence ou un minimum local de la puissance transmissible sur la fréquence afin de détecter la présence du point de fonctionnement supplémentaire (A_P2).

2. Procédé selon la revendication 1, dans lequel
- le point de fonctionnement (A_P1, A _P2) détermine la fréquence du signal de commande (A_S).

3. Procédé selon la revendication 1 ou 2, dans lequel
- la valeur de consigne est une valeur de consigne de puissance qui indique une puissance à transmettre.

4. Procédé selon la revendication 3, dans lequel
- une puissance transmissible sur la fréquence est déterminée, l'au moins un point de fonctionnement (A_P1, A _P2) du signal de commande (A_S) étant déterminé en fonction de la puissance transmissible sur la fréquence déterminée et de la valeur de consigne de puissance.

5. Procédé selon la revendication 4, dans lequel
- dans le cas où plus d'un point de fonctionnement (A_P1, A_P2) est déterminé pour une valeur de consigne de puissance, le point de fonctionnement qui satisfait à un critère d'optimisation est sélectionné parmi les plusieurs points de fonctionnement (A_P1, A_P2).

6. Procédé selon la revendication 5, dans lequel
- le critère d'optimisation est la puissance dissipée minimale.

7. Procédé selon l'une quelconque des revendications précédentes, dans lequel
- pendant la recherche, une amplitude du signal de commande (A_S) est réduite.

8. Procédé selon l'une quelconque des revendications précédentes, dans lequel
- une puissance dissipée est déterminée au premier point de fonctionnement (A_P1) et au point de fonctionnement supplémentaire éventuellement trouvé (A_P2), le point de fonctionnement (A_P1, A_P2) ayant la puissance dissipée la plus faible étant ensuite réglé.

9. Dispositif (100) destiné à la transmission sans fil d'énergie en direction d'un consommateur électrique (200) au moyen d'un couplage inductif, qui est configuré pour mettre en œuvre le procédé selon l'une des revendications précédentes, possédant :
- un onduleur (102) alimenté à partir d'une tension d'alimentation (U_S),
- au moins un condensateur (104, 105),
- une bobine de puissance (101),
- ledit au moins un condensateur (104, 105) et la bobine de puissance (101) étant connectés de manière à former un circuit oscillant (103), et
- l'onduleur (102) étant conçu pour générer un signal d'attaque (A_S) destiné à la bobine de puissance (101) à partir de la tension d'alimentation (U_S), et
- une unité de commande (106), laquelle est caractérisée pour commander l'onduleur (102) de telle sorte qu'un procédé selon l'une des revendications précédentes soit mis en œuvre.

10. Système, comportant :
- un dispositif (100) destiné à la transmission sans fil d'énergie en direction d'un consommateur électrique (200) au moyen d'un couplage inductif selon la revendication 9, et
- un consommateur électrique (200).
